# EUROPEAN PATENT SPECIFICATION

(11) **EP 2 211 581 B1**
(45) Date of publication and mention of the grant of the patent: **10.10.2012**
(21) Application number: 09360008.8
(22) Date of filing: 27.01.2009
(51) Int. Cl.: H04L 7/04, H04J 3/06

(54) **Local network timing reference signal**
Referenzsignal zur Synchronisation in einem lokalen Netz
Signal de référence de synchronisation de réseau local.

(43) Date of publication of application: 28.07.2010
(73) Proprietor: Alcatel Lucent, 75007 Paris (FR)
(72) Inventor: Shahid, Malek, Chippenham, Wiltshire SN 14 0TJ (GB); Samuel, Louis Gwyn, Swindon, Wiltshire SN5 5QD (GB); Claussen, Holger, Swindon, Wiltshire SN5 3NJ (GB)
(74) Representative: Sarup, David Alexander

(56) References cited:
- EP-A- 1 489 762
- EP-A- 1 843 501
- WO-A-97/23071
- WO-A-99/12273

## Description

### FIELD OF THE INVENTION

The present invention relates to a method of adjusting a local network timing reference signal generated by end-user wireless telecommunications equipment, a computer program product and end-user wireless telecommunications equipment.

### BACKGROUND OF THE INVENTION

In a wireless telecommunications system it is necessary, typically for regulatory and performance reasons, to ensure accurate timing of wireless transmissions. For example, in a wireless communications network defined by the Third Generation Partnership Project (3GPP), transmitting equipment within the network need to ensure accurate timing, not only to ensure that transmissions occur at the correct time, but also to ensure that transmissions occur within specified frequency bonds. For macro base stations these timing requirements are relatively strict, but achievement of those timing requirements is possible due to the dedicated backhaul infrastructure coupling those macro base stations with management and administration equipment of the network over which updates to a timing reference signal generated within the macro base station can be provided. For user equipment, accurate timing is achieved by providing timing control information which transmitted frequently by the macro base stations to the user equipment during active communication to adjust a reference timing signal generated within the user equipment. Following the advent of so-called pico or femto based stations, a network timing server was provided which periodically transmits a network timing signal over the internet protocol (IP) backhaul to those pico or femto base stations to help ensure that their timing reference signal remains sufficiently accurate.

WO 99/12273 discloses a technique for cell searching in which the mobile station synchronises itself with the base station by finding chip, symbol and frame boundaries. The receiver must demodulate the received signals before they can be applied to a filter to detect these boundaries. If there are frequency errors in the receiver, demodulation cannot occur and a reasonably fine frequency synchronisation must be established before the boundaries can be detected and synchronisation can occur.

It is desired to provide an improved technique for providing a local network timing reference signal.

### SUMMARY OF THE INVENTION

According to a first aspect of the present invention, there is provided a method of adjusting a local network timing reference signal generated by end-user wireless telecommunications equipment which controls transmissions made by said end-user wireless telecommunications equipment, the method comprising the steps of: extracting a data sequence transmitted wirelessly from a base station, the data sequence being transmitted in synchronisation with a base station network timing reference signal; comparing the data sequence with a matching local data sequence generated in synchronisation with the local network timing reference signal to generate a timing misalignment signal representative of a difference in timing between the base station network timing reference signal and the local network timing reference signal; and utilising the timing misalignment signal to adjust the local network timing reference signal to reduce misalignment with the base station network timing reference signal and to synchronise timing of transmissions by said end-user wireless telecommunications equipment with those of said base station.

The first aspect recognises that it is difficult to provide an accurate local timing reference signal. One option may be to provide a very accurate local timing signal generator, but these are expensive and may not be economically viable for end-user telecommunications equipment. Accordingly, less accurate local timing signal generators are provided, but these then require regular updating in order to maintain synchronisation with the rest of the network. For example, for user equipment to maintain adequate synchronisation with a macro base station, it is necessary for the macro base station to regularly transmit timing correction information to the user equipment whilst that user equipment is in active communication. The first aspect also recognises that this requires additional time synchronisation functionality to be provided within the macro base station and requires the use of a proportion of the wireless bandwidth between the macro base station and the user equipment to be allocated to the support the transmission of this timing correction information. For pico or femto base stations, a dedicated network timing server needs to be provided by the network, which increases overall costs and complexity. Also, a significant amount of the customer's Internet bandwidth (which is used as a backhaul for the pico or femto base station) needs to be allocated simply to support the transmission of this timing correction information. Furthermore, it is recognised that even when using a network timing server to update to local timing signal, unpredictable delays in the IP network can cause jitter in the timing signal provided to the pico of femto base stations which can cause frequency shifts in the transmissions within the femto or pico cells beyond an amount specified by a regulator which can cause loss of signal during transmission, increases interference and can even interfere with transmissions occurring in an adjacent frequency band.

Accordingly, a data sequence transmitted from a base station is extracted. This data sequence is compared with a local data sequence which matches the received data sequence. Because the data sequence from the base station is synchronised with a network timing reference signal provided by the base station and because the data sequence provided locally is in synchronisation with a network timing reference signal provided locally, it is possible to compare the two data sequences to determine any timing misalignment between the two data sequences. A timing misalignment signal is therefore generated which is representative of this timing difference. The misalignment signal can then be used to adjust the network timing reference signal generated locally to reduce any misalignment between that reference signal and the base station network timing reference signal. In this way, it can be seen that a correction of the local timing signal can be made without the need to send a dedicated timing correction signal, as would otherwise be required for user equipment when communicating with a base station. Also, no dedicated network timing server is required; as would otherwise be required for pico or femto base stations, nor is any significant jitter introduced because the signal is transmitted wirelessly rather than through an IP network. Furthermore, such a data sequence will typically routinely be transmitted anyway by base stations (because they are routinely transmitted for other purposes) and so these data sequences may be utilised thereby avoiding the need to transmit any dedicated timing synchronisation signal whatsoever and avoiding the unnecessary use of valuable bandwidth.

It will be appreciated that typically it will not be necessary to completely eliminate any misalignment between the timing signals since adequate performance may be achieved even when the timing signals are slightly misaligned, providing the misalignment is within predefined limits, typically set for the type of user equipment. For example, a femto base station can accept up to a 250 parts per billion variation in the base frequency.

In one embodiment, the step of comparing comprises correlating the local data sequence with the data sequence to generate the timing misalignment signal. Accordingly, existing correlation functionality within the end-user equipment may be utilised to determine the extent of correlation between the two data sequences. Again, by reusing existing functionality, the need to provide additional hardware is obviated.

In one embodiment, the timing misalignment signal is generated having a magnitude and sign representative of the difference in timing between the base station network timing reference signal and the local network timing reference signal. Accordingly, the misalignment signal may be generated having a magnitude representative of the extent of correlation between the two data sequences and a sign representative of the direction of misalignment. For example, a zero timing misalignment signal may indicate complete correlation between the data sequences, a negative value of misalignment signal may indicate that one data sequence occurred earlier than the other whilst a positive misalignment signal may indicate the reverse situation.

In one embodiment, the step of utilising comprises: adjusting generation of the local network timing reference signal in dependence on the timing misalignment signal. Accordingly, the generation of the local timing reference signal may be adjusted in response to the timing misalignment signal in order to reduce misalignment between the two. It will be appreciated that the adjustment of the timing reference signal may be achieved in a variety of ways, dependent on the particular implementation used to generate that timing signal.

In one embodiment, the step of utilising comprises: generating a timing correction signal in response to the timing misalignment signal, the timing correction signal being representative of a correction required to the local network timing reference signal and utilising the correction signal to adjust generation of the local network timing reference signal. Accordingly, rather than the timing misalignment signal itself being used directly to reduce misalignment, a timing correction signal may be generated from that timing misalignment signal and that correction signal used to cause a correction in the generation of the local timing reference signal. Again, it will be appreciated that the correction of the timing reference signal may be achieved in a variety of ways, dependent on the particular implementation used to generate that timing signal.

In one embodiment, the step of comparing comprises: comparing each one of a plurality of the data sequences with a corresponding one of plurality of the local data sequences to generate a plurality of timing misalignment signals and generating an averaged timing misalignment signal from the plurality of timing misalignment signals which is representative of an average difference in timing between the base station network timing reference signal and the local network timing reference signal, and wherein the step of utilising comprises: utilising the averaged timing misalignment signal to adjust the local network timing reference signal to reduce misalignment with the base station network timing reference signal. Accordingly, rather than using just one comparison, a plurality of such comparisons may be made, each of which may cause the generation of a corresponding misalignment signal. Those misalignment signals may then be averaged to generate an averaged timing misalignment signal. This average signal will provide a more reliable indication of timing misalignment since it will be less susceptible to random noise or other variations. That average timing misalignment signal may then be utilised to reduce misalignment between the two reference signals.

In one embodiment, the method comprises the step of: determining drift characteristics of the local network timing reference signal; and estimating from the drift characteristics when adjustment of the local network timing reference signal is next required to maintain the difference in timing within a predetermined threshold. Accordingly, the drift characteristics of the local reference signal may be determined. It will be appreciated that these drift characteristics provide an indication of the anticipated future accuracy of the local reference signal. For example, it may be determined, based on the timing misalignment signal, that the local reference signal is drifting at a particular rate. An estimate can then be made from that drift characteristic of when the timing reference signal will reach a predetermined threshold representing an unacceptable level of drift which would otherwise result in unacceptable performance. This drift characteristic can then be utilised to estimate when it is necessary to perform adjustment of the local reference signal in order to maintain acceptable performance.

In one embodiment, the data sequence comprises a common pilot transmitted from the base station over a common pilot channel. It will be appreciated that a common pilot will be routinely transmitted in a network from a base station over a common pilot channel which enables reuse of an existing data sequence already transmitted by the network for other purposes. Furthermore, it is typical for end-user equipment during initial set-up to be provided with details of the common pilot data sequence, together with the transmission frequency and spreading code and so no additional information needs to be provided to the end user equipment to utilise this technique.

In one embodiment, the end-user wireless telecommunications equipment comprises one of a pico base station, a femto base station and user equipment.

According to a second aspect of the present invention, there is provided a computer program product operable, when executed on a computer, to perform the method steps of the first aspect.

According to a third aspect of the present invention there is provided end-user wireless telecommunications equipment, comprising: reception logic operable to extract a data sequence transmitted wirelessly from a base station, the data sequence being transmitted in synchronisation with a base station network timing reference signal which controls transmissions made by said end-user wireless telecommunications equipment; timing logic operable to generate a local network timing reference signal; local data sequence generation logic operable to generate a local data sequence in synchronisation with the local network timing reference signal; comparison logic operable to compare the data sequence with the local data sequence to generate a timing misalignment signal representative of a difference in timing between the base station network timing reference signal and the local network timing reference signal; and timing adjustment logic operable to utilise the timing misalignment signal to adjust the local network timing reference signal generated by the timing logic to align with the base station network timing reference signal and to synchronise timing of transmissions by said end-user wireless telecommunications equipment with those of said base station.

In one embodiment, the comparison logic is operable to correlate the local data sequence with the data sequence to generate the timing misalignment signal.

In one embodiment, the comparison logic is operable to generate the timing misalignment having a magnitude and sign representative of the difference in timing between the base station network timing reference signal and the local network timing reference signal.

In one embodiment, the timing adjustment logic is operable to adjust the generation of the local network timing reference signal in dependence on the timing misalignment signal.

In one embodiment, the timing adjustment logic is operable to generate a timing correction signal in response to the timing misalignment signal, the timing correction signal being representative of a correction required to the local network timing reference signal and to utilise the correction signal to adjust generation of the local network timing reference signal.

In one embodiment, the comparison logic is operable to compare each one of a plurality of the data sequences with a corresponding one of plurality of the local data sequences to generate a plurality of timing misalignment signals and generating an averaged timing misalignment signal from the plurality of timing misalignment signals which is representative of an average difference in timing between the base station network timing reference signal and the local network timing reference signal, and the timing adjustment logic is operable to utilise the averaged timing misalignment signal to adjust the local network timing reference signal to reduce misalignment with the base station network timing reference signal.

In one embodiment, there is provided drift logic operable to determine drift characteristics of the local network timing reference signal to and to estimate from the drift characteristics when adjustment of the local network timing reference signal is next required to maintain the difference in timing within a predetermined threshold.

In one embodiment, the data sequence comprises a common pilot transmitted from the base station over a common pilot channel.

In one embodiment, the end-user wireless telecommunications equipment comprises one of a pico base station, a femto base station and user equipment.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates an example femto cell deployment within one macro cell shown in Figure 1;
Figure 3 illustrates in more detail components of the femto base stations shown in Figure 2; and

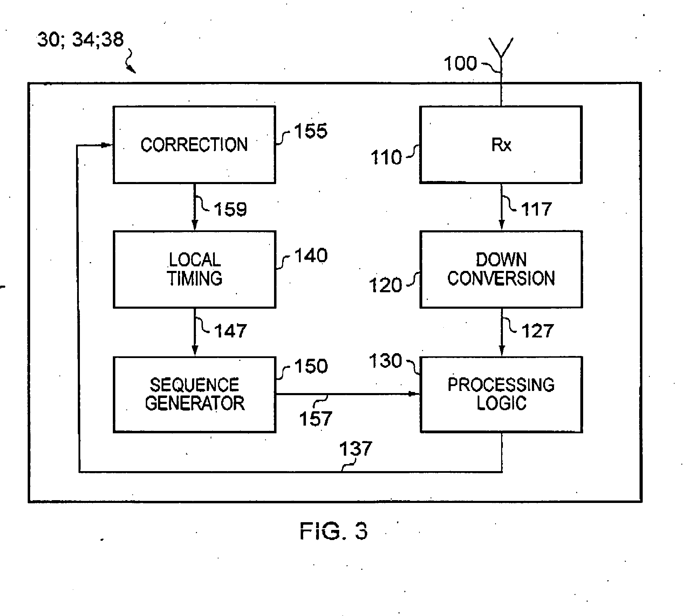

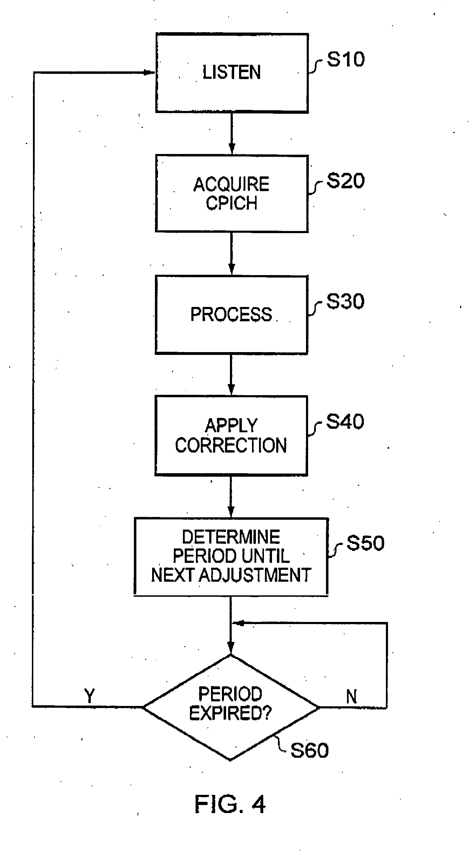

Figure 3 illustrate the main processing steps of the femto base stations shown in Figure 3.

### DESCRIPTION OF THE EMBODIMENTS

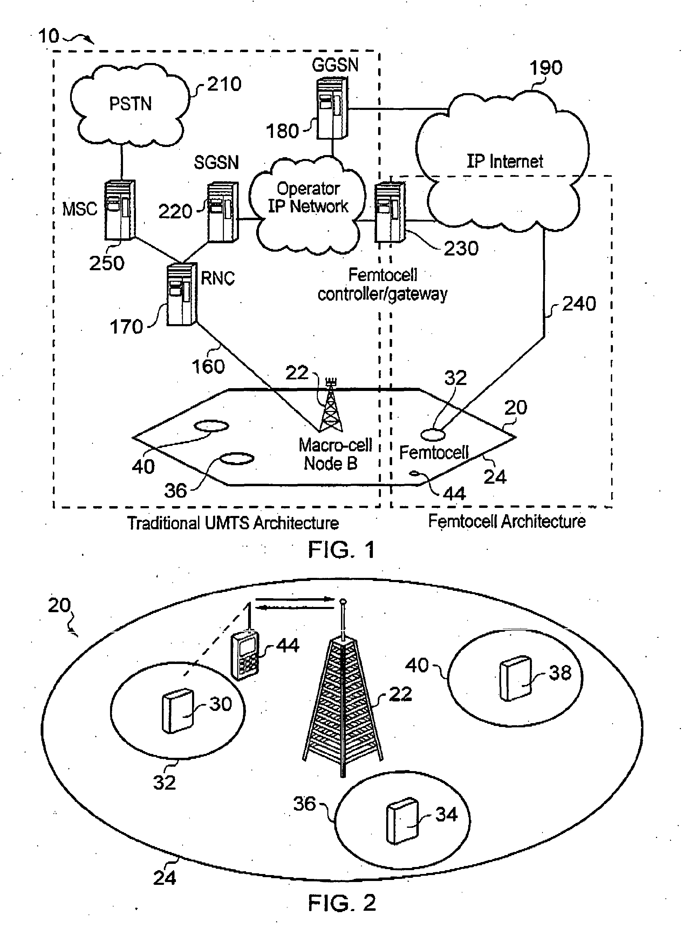

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170.
The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the internet.

As shown in more detail in Figure 2, there are provided femto cell base stations 30, 34, 38 each of which provides a femto cell 32, 36, 40 in the vicinity of a building within which the associated femto, cell base station is installed. The femto cells 32, 36, 40 provide local communications coverage for a user in the vicinity of those buildings. Each femto cell base station 30, 34, 38 communicates via a femtocell controtler/gateway 230. A handover or camping event occurs between the base station 22 and the femto cell base stations 30, 34, 38 when the femto base stations 30, 34, 38 detect that user equipment comes within range. The femto cell base stations 30, 34, 38 typically utilise the user's broadband Internet connection 240 (such as ADSL, Cable, etc) as a backhaul.

Femto cell base stations 30, 34, 38 are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations 30, 34, 38 are provided locally by customers. Such femto cell base stations 30, 34, 38 provide local coverage in areas of the macro network where quality of service may be low. Hence, the femto cell base stations 30, 34, 38 provide for improved quality of service in areas which are difficult for network operators. To reduce the cost of the femto base stations 30, 34, 38 and to reduce complexity and interference effects of the femto cell on other user equipment within the macro cell, the transmission power of the femto cell base station 30, 34, 38 is relatively low in order to restrict the size of the femto cell to a range of tens of metres or less. The femto cell base stations 30, 34, 38 have extensive auto-configuration and self-optimisation capability to enable a simply plug-and-play deployment. As such, they are designed to automatically integrate themselves into an existing macro cellular wireless network 20. In addition, some access point within the macro cellular network contains some functionality traditionally provided by the core network. One example is the UMTS base station router which integrates functions of the macro base station 20, RNC 170, SGSN 220 and GGSN 180.

Wireless transmissions within the wireless network 20 occur in, for example, the 2.1 GHz, 1900 MHz and/or 850 MHz spectrum and 5 MHz bands are allocated for use by network operators. These 5 MHz bands have guard bands to reduce interference between transmissions in adjacent bands. However, inaccuracies in the reference timing signals within network equipment can cause a frequency shift in those wireless transmissions. These frequency shifts, if unchecked, can cause frequency shifts into an adjacent band, which is contrary to licence regulation, can lead to transmission loss within the network and cause interference. Accordingly, each macro base station 22 is required to maintain a timing accuracy of 50 parts per billion, whilst micro base stations (not shown) are required to provide a timing accuracy of 100 parts per billion and pico or femto base stations 30, 34, 38 are required to provide a timing accuracy of 100 and 250 parts per billion, respectively.

Upon initialisation, each femto base station 30, 34, 38 is informed of the transmission and reception frequency bands of adjacent macro base stations, their spreading codes and their common pilot data sequence. The femto base stations are also advised of available frequency bands and available spreading codes for transmissions. The femto base stations will then perform initial quality of service measurements and determine which macro base station to register with, together with making a determination of which frequency bands and spreading code to utilise. The femto base stations and macro base station may utilise the same frequencies band, the transmissions being separated using different spreading codes. When this occurs, the femto base station will tune its receiver to the macro base station transmission band when performing network listening or "sniffing" functions. Alternatively, the femto base stations and macro base station may use different frequencies. In that case, the frequency bands used for transmission and reception in the femto base station differ to those used for transmission and receiving in the macro base station. Accordingly, when performing sniffing functions, the femto base station will retune its receiver to the frequency band used by the macro base station.

Figure 3 illustrates in more detail the main components of the femto base station 30; 34; 38 according to one embodiment. Only components related to reception are shown, the transmission components and other components of the femto base station are omitted to help improve clarity.

In overview, the femto base station comprises one or more antenna 100 utilised to receive wireless transmissions. The antenna 100 are coupled with a receiver 110 operable to tune the antenna 100 to the required frequency band for transmissions from the macro base station 22. The receiver 110 is coupled with down conversion logic 120 which extracts data from the received signal and provides a data sequence to processing logic 130. Meanwhile, a local timing circuit 140 generates a local timing signal and provides this to a sequence generator 150. The sequence generator 150 utilises the local timing signal and generates a local data sequence which is timed in synchronisation with the local timing signal. This local data sequence is provided to the processing logic 130. The processing logic 130 processes these two data sequences and generates an error signal which is provided to correction logic 160. The correction logic 160 then determines a correction factor and sends a correction signal representative of this correction factor to the local timing logic 140 to cause a change in the generated local timing signal.

In particular, the reception logic 110 listens on the transmission band of macro base station 20. The received signal 117 is provided to the down conversion logic 120 which extracts the common pilot signal 127 transmitted over the common pilot channel by the macro base station 20. The common pilot signal 127 encodes a data sequence of bits, this common pilot signal 127 being repeated within each of the 15 slots of repeating 10 millisecond transmission frames. The common pilot signal 127 is generated by the macro base station 20 in synchronisation with a macro base station network timing reference signal. As such, the macro base station network timing reference signal is derivable from the common pilot signal 127. The common pilot signal 127 is provided to the processing logic 130.

As mentioned above, the femto base stations 30; 34; 38 are each provided with the common pilot data sequence on initialisation. Accordingly, the sequence generator 150 is provided with that common pilot data sequence and the local timing signal 147 generated by the local timing circuit 140, and generates a matching local common pilot signal 157. The local common pilot signal 157 generated by the sequence generator 150 is provided to the processing logic 130. The processing logic 130 includes a correlator (not shown) which correlates the data sequences within the two signals 157, 127. In, order to improve accuracy, rather than performing correlation on a single data sequence, correlation is performed over a plurality of such data sequences. The correlator then determines, using known techniques, the extent of any misalignment between the two data sequences and generates the error signal 137 which could be used to directly change the timing of the local timing circuit 140 but, in this embodiment, is provided to the correction logic 160 which in turn generates the correction signal 159 to be applied to the local timing circuit 140.

The local timing logic 140, in response to the correction signal 159, adjusts the timing of the local timing signal 147 provided to the sequence generator 150. The sequence generator 150 then generates the local common pilot signal 157 in synchronisation with the adjusted local timing signal and provides this to the processing logic 130 which again assesses the extent of correlation between the local common pilot signal 157 and the common pilot signal 127, determines whether further realignment is required and, if so, generates a further correction signal 159.

For cost reasons, the local timing logic 140 is unlikely to be highly accurate or exceptionally finely controllable. However, that does not particularly matter since the timing accuracy of the local timing signal 147 is permitted to be five times less than that of the macro base station network timing reference signal. Accordingly, as long as the local timing signal 147 has been realigned to within the accuracy permitted for the femto base station, then the adjustment process can be considered to be complete. An assessment then is made by the processing logic 130 of the extent of drift that has occurred between adjustments taking place and estimate is made of how long the local timing circuit 140 may be left to run before needing to perform another realignment with the macro base station network timing reference signal.

Figure 3 illustrates in more detail the main processing steps of the femto base station 30; 34; 38 when performing such alignment.

At step S10, the reception logic 110 listens on the frequency band used by the macro base station for transmissions.

At step S20, the down conversion logic 120 acquires the common pilot signal 127 from within the received transmissions.

At step S30, the processing logic 130 compares the common pilot signal 127 received from the macro base station 22 with the local common pilot signal 157 generated within the femto base station. The common pilot signal 127 received from the macro base station was generated with reference to a macro base station network timing reference signal, whilst the locally common pilot signal 157 was generated with reference to the local network timing signal 147. This processing logic 130 examines the correlation between the repeating data sequences in the two signals and generates the error signal 137 which is utilised to change the timing of the local network timing signal 147.

At step S40, this error signal 137 is used to generate the correction signal 159 which is used to reduce any misalignment between the local timing signal 147 and the macro base station network timing reference signal to an acceptable amount.

At step S50, a determination is made of the extent of drift encountered since the previous realignment of the local timing signal 147 took place. From this determination an estimate of the amount of time for which the local timing logic 140 may be left before a further adjustment is necessary is established.

At step S60, a determination is made is to whether that period of time has expired. If the period has not expired, then it can be assumed that the local timing signal 147 is still sufficiently accurate and no adjustment is necessary; the femto base station can continue its normal operation. However, upon expiry of that period, processing returns to step S10 to reinitiate the alignment of the local timing signal 147 with the base station network timing reference signal.

Accordingly, it will be appreciated that this provides an accurate timing solution for end user equipment which does not require the use of a network timing server, nor does it require the use of any dedicated timing information to be transmitted but instead reuses existing information and enables the use of a lower-performance oscillator in the local timing logic 140 of the user equipment.

Accordingly, it can be seen that this approach to timing signal synchronisation makes use the existing network listening functionality. This removes the need for dedicated timing servers and also eliminates the need to transmit data between that timing server and the femto base station which consumes IP bandwidth and also between base stations and user equipment which consumes wireless transmission bandwidth and resources at the base stations to generate timing correction signals.

In summary, the macro base stations transmit a common pilot using frames of constant length. A data sequence is sent in slots which repeat periodically within repeating frames. The periodicity of the pilot is used to derive the more accurate macro base station network timing signal. The femto base stations employ a detector to generate a signal that is proportional in magnitude and sign to the level of accuracy of the local clock source of the femto base station. The detector relies on the characteristics of the common pilot in the common pilot channel of the macro cell to generate the error signal. The detector is unbiased and generates a signal that is used to discipline the local oscillator of the femto base station and drive its frequency to within specified limits. The femto base station is equipped with network listening functionality. This functionality is switched on periodically for self-optimisation and auto-configuration purposes. When the network listening is switched on the femto base station will detect any 3G signals being transmitted on the allocated spectrum. Neighbour list information may be used to enable a femto base station to determine whether a stronger signal can be received from a neighbouring macro base station and also to help it to disregard any erroneous signals which may be received from neighbouring femto base stations. The holdover time of the local oscillator determines how often the network listening needs to occur. The shorter the holdover the more often the listening function needs to be activated.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

## Claims

1. A method of adjusting a local network timing reference signal generated by end-user wireless telecommunications equipment (30; 34; 38) which controls tronsmissions made by said end-user wireless telecommunications equipment, said method comprising the steps of:
extracting (S10, S30) a data sequence transmitted wirelessly from a base station (22), said data sequence being transmitted in synchronisation with a base station network timing reference signal;
comparing (S30) said data sequence with a matching local data sequence generated in synchronisation with said local network timing reference signal to generate a timing misalignment signal representative of a difference in timing between said base station network timing reference signal and said local network timing reference signal; and
utilising (S40) said timing misalignment signal to adjust said local network timing reference signal to reduce misalignment with said base station network timing reference signal and to synchronise timing of transmissions by said end-user wireless telecommunications equipment with those of said base station.

2. The method of claim 1, wherein said step of comparing comprises:
correlating said local data sequence with said data sequence to generate said timing misalignment signal.

3. The method of claim 2, wherein said timing misalignment signal is generated having a magnitude and sign representative of said difference in timing between said base station network timing reference signal and said local network timing reference signal.

4. The method of claim 3, wherein said step of utilising comprises:
adjusting generation of said local network timing reference signal in dependence on said timing misalignment signal.

5. The method of claim 3, wherein said step of utilising comprises:
generating a timing correction signal in response to said timing misalignment signal, said timing correction signal being representative of a correction required to said local network timing reference signal and utilising said correction signal to adjust generation of said local network timing reference signal.

6. The method of claim 1, wherein said step of comparing comprises:
comparing each one of a plurality of said data sequences with a corresponding one of plurality of said local data sequences to generate a plurality of timing misalignment signals and generating an averaged timing misalignment signal from the plurality of timing misalignment signals which is representative of an average difference in timing between said base station network timing reference signal and said local network timing reference signal, and wherein said step of utilising comprises:
utilising said averaged timing misalignment signal to adjust said local network timing reference signal to reduce misalignment with said base station network timing reference signal.

7. The method of claim 1, comprising the steps of:
determining (S50) drift characteristics of said local network timing reference signal; and
estimating (S50) from said drift characteristics when adjustment of said local network timing reference signal is next required to maintain said difference in timing within a predetermined threshold.

8. The method of claim 1, wherein said data sequence comprises a common pilot transmitted from said base station over a common pilot channel.

9. The method of claim 1, wherein said end-user wireless telecommunications equipment comprises one of a pico base station, a femto base station and user equipment.

10. A computer program product operable, when executed on a computer, to perform the method steps of claim 1.

11. End-user wireless telecommunications equipment (30; 34; 38), comprising:
reception logic (110) operable to extract a data sequence transmitted wirelessly from a base station (22), said data sequence being transmitted in synchronisation with a base station network timing reference signal;
timing logic (140) operable to generate a local network timing reference signal which controls transmissions made by said end-user wireless telecommunications equipment;
local data sequence generation logic (150) operable to generate a local data sequence in synchronisation with said local network timing reference signal;
comparison logic (130) operable to compare said data sequence with said local data sequence to generate a timing misalignment signal representative of a difference in timing between said base station network timing reference signal and said local network timing reference signal; and
timing adjustment logic (155) operable to utilise said timing misalignment signal to adjust said local network timing reference signal generated by said timing logic to align with said base station network timing reference signal and to synchronise timing of transmissions by said end-user wireless telecommunications equipment with those of said base station.

12. The end-user wireless telecommunications equipment of claim 11, wherein said comparison logic is operable to correlate said local data sequence with said data sequence to generate said timing misalignment signal.

13. The end-user wireless telecommunications equipment of claim 11, wherein said comparison logic is operable to compare each one of a plurality of said data sequences with a corresponding one of plurality of said local data sequences to generate a plurality of timing misalignment signals and generating an averaged timing misalignment signal from the plurality of timing misalignment signals which is representative of an average difference in timing between said base station network timing reference signal and said local network timing reference signal, and said timing adjustment logic is operable to utilise said averaged timing misalignment signal to adjust said local network timing reference signal to reduce misalignment with said base station network timing reference signal.

14. The end-user wireless telecommunications equipment of claim 11, wherein said timing adjustment logic is operable to adjust the generation of said local network timing reference signal in dependence on said timing misalignment signal.

15. The end-user wireless telecommunications equipment of claim 11, comprising:
drift logic operable to determine drift characteristics of said local network timing reference signal to and to estimate from said drift characteristics when adjustment of said local network timing reference signal is next required to maintain said difference in timing within a predetermined threshold.

## Patentansprüche

1. Verfahren zum Anpassen eines von einem drahtlosen Endbenutzer-Telekommunikationsgerät (30; 34; 38) erzeugten Referenzsignals zur Synchronisation in einem lokalen Netzwerk, welches die von dem besagten drahtlosen Endbenutzer-Telekommunikationsgerät durchgeführten Übertragungen steuert, wobei das besagte Verfahren die folgenden Schritte umfasst:
Extrahieren (S10, S30) einer drahtlos von einer Basisstation (22) übertragenen Datensequenz, wobei die besagte Datensequenz in Synchronisation mit einem Referenzsignal zur Synchronisation in einem Basisstationsnetzwerk übertragen wird;
Vergleichen (S30) der besagten Datensequenz mit einer in Synchronisation mit dem besagten Referenzsignal zur Synchronisation in einem lokalen Netzwerk erzeugten abgestimmten lokalen Datensequenz, um ein Zeitversatzsignal zu erzeugen, welches für eine zeitliche Differenz zwischen dem besagten Referenzsignal zur Synchronisation in einem Basisstationsnetzwerk und dem besagten Referenzsignal zur Synchronisation in einem lokalen Netzwerk repräsentativ ist; und
Verwenden (S40) des besagten Zeitversatzsignals zum Anpassen des besagten Referenzsignals zur Synchronisation in einem lokalen Netzwerk, um den Versatz mit dem besagten Referenzsignal zur Synchronisation in einem Basisstationsnetzwerk zu reduzieren und die Zeitpunkte der Übertragungen durch das besagte Endbenutzer-Telekommunikationsgerät mit denen der besagten Basisstation zu synchronisieren.

2. Verfahren nach Anspruch 1, wobei der besagte Schritt des Vergleichens umfasst:
Korrelieren der besagten lokalen Datensequenz mit der besagten Datensequenz, um das besagte Zeitversatzsignal zu erzeugen.

3. Verfahren nach Anspruch 2, wobei das besagte Zeitversatzsignal mit einer Größe und einem Vorzeichen, welche für die besagte zeitliche Differenz zwischen dem besagten Referenzsignal zur Synchronisation in einem Basisstationsnetzwerk und dem besagten Referenzsignal zur Synchronisation in einem lokalen Netzwerk repräsentativ sind, erzeugt wird.

4. Verfahren nach Anspruch 3, wobei der besagte Schritt des Verwendens umfasst:
Anpassen der Erzeugung des besagten Referenzsignals zur Synchronisation in einem lokalen Netzwerk in Abhängigkeit von dem besagten Zeitversatzsignal.

5. Verfahren nach Anspruch 3, wobei der besagte Schritt des Verwendens das Erzeugens eines Zeitkorrektursignals in Reaktion auf das besagte Zeitversatzsignal, wobei das besagte Zeitkorrektursignal für eine erforderlich Korrektur des besagten Referenzsignals zur Synchronisation in einem lokalen Netzwerk repräsentativ ist, und das Verwenden des besagten Korrektursignals zum Anpassen der Erzeugung des besagten Referenzsignals zur Synchronisation in einem lokalen Netzwerk umfasst.

6. Verfahren nach Anspruch 1, wobei der besagte Schritt des Vergleichens umfasst:
Vergleichen einer jeden einer Vielzahl der besagten Datensequenzen mit einer entsprechenden einer Vielzahl der besagten lokalen Datensequenzen, um eine Vielzahl von Zeitversatzsignalen zu erzeugen, und Erzeugen eines gemittelten Zeitversatzsignals aus der Vielzahl von Zeitversatzsignalen, welches für eine durchschnittliche zeitliche Differenz zwischen dem besagten Referenzsignal zur Synchronisation in einem Basisstationsnetzwerk und dem besagten Referenzsignal zur Synchronisation in einem lokalen Netzwerk repräsentativ ist, und wobei der besagte Schritt des Verwendens umfasst:
Verwenden des besagten gemittelten Zeitversatzsignals zum Anpassen des besagten Referenzsignals zur Synchronisation in einem lokalen Netzwerk, um den Versatz mit dem besagten Referenzsignal zur Synchronisation in einem Basisstationsnetzwerk zu reduzieren.

7. Verfahren nach Anspruch 1, die folgenden Schritte umfassend:
Ermitteln (S50) der Drifteigenschaften des besagten Referenzsignals zur Synchronisation in einem lokalen Netzwerk; und
Schätzen (S50), ausgehend von den besagten Drifteigenschaften, wann ein erneutes Anpassen des besagten Referenzsignals zur Synchronisation in einem lokalen Netzwerk erforderlich ist, um die besagte zeitliche Differenz innerhalb eines vorbestimmten Grenzwerts zu halten.

8. Verfahren nach Anspruch 1, wobei die besagte Datensequenz einen von der besagten Basisstation über einen gemeinsamen Pilotkanal übertragenen gemeinsamen Piloten umfasst.

9. Verfahren nach Anspruch 1, wobei das besagte drahtlose Endbenutzer-Telekommunikationsgerät entweder eine Pico-Basisstation, eine Femto-Basisstation oder ein Benutzergerät umfasst.

10. Computerprogramm-Produkt, bei Ausführen auf einem Computer betreibbar, um die Verfahrensschritte gemäß Anspruch 1 durchzuführen.

11. Drahtloses Endbenutzer-Telekommunikationsgerät (30; 34; 38), umfassend:
Eine Empfangslogik (110), betreibbar, um eine drahtlos von einer Basisstation (22) übertragene Datensequenz zu extrahieren, wobei die besagte Datensequenz in Synchronisation mit einem Referenzsignal zur Synchronisation in einem Basisstationsnetzwerk übertragen wird;
eine Zeitgebungskogik (140), betreibbar, um ein Referenzsignal zur Synchronisation in einem lokalen Netzwerk zu erzeugen;
eine Logik für die Erzeugung einer lokalen Datensequenz (150), betreibbar, um eine lokale Datensequenz in Synchronisation mit dem besagten Referenzsignal zur Synchronisation in einem lokalen Netzwerk zu erzeugen;
eine Vergleichslogik (130), betreibbar, um die besagte Datensequenz mit der besagten lokalen Datensequenz zu vergleichen, um ein Zeitversatzsignal zu erzeugen, welches für eine zeitliche Differenz zwischen dem besagten Referenzsignal zur Synchronisation in einem Basisstationsnetzwerk und dem besagten Referenzsignal zur Synchronisation in einem lokalen Netzwerk repräsentativ ist; und
eine Zeitanpassungslogik (155), betreibbar, um das besagte Zeitversatzsignal zum Anpassen des besagten von der besagten Zeitgebungslogik erzeugten Referenzsignals zur Synchronisation in einem lokalen Netzwerk zu verwenden, um es mit dem besagten Referenzsignal zur Synchronisation in einer Basisstation abzugleichen und die Zeitpunkte der Übertragungen durch das besagte Endbenutzer-Telekommunikationsgerät mit denen der besagten Basisstation zu synchronisieren.

12. Drahtloses Endbenutzer-Telekommunikationsgerät nach Anspruch 11, wobei die besagte Vergleichslogik betreibbar ist, um die besagte lokale Datensequenz mit der besagten Datensequenz zu korrelieren, um das besagte Zeitversatzsignal zu erzeugen.

13. Drahtloses Endbenutzer-Telekommunikationsgerät nach Anspruch 11, wobei die besagte Vergleichslogik betreibbar ist, um eine jede einer Vielzahl der besagten Datensequenzen mit einer entsprechenden einer Vielzahl der besagten lokalen Datensequenzen zu vergleichen, um eine Vielzahl von Zeitversatzsignalen zu erzeugen, und um ein gemitteltes Zeitversatzsignal aus der Vielzahl von Zeitversatzsignalen zu erzeugen, welches für eine durchschnittliche zeitliche Differenz zwischen dem besagten Referenzsignal zur Synchronisation in einem Basisstationsnetzwerk und dem besagten Referenzsignal zur Synchronisation in einem lokalen Netzwerk repräsentativ ist, und wobei die besagte Zeitanpassungslogik betreibbar ist, um das besagte gemittelte Zeitversatzsignal für das Anpassen des besagten Referenzsignals zur Synchronisation in einem lokalen Netzwerk zu verwenden, um den Versatz mit dem besagten Referenzsignal zur Synchronisation in einem Basisstationsnetzwerk zu reduzieren.

14. Drahtloses Endbenutzer-Telekommunikationsgerät nach Anspruch 11, wobei die besagte Zeitanpassungslogik betreibbar ist, um die Erzeugung des besagten Referenzsignals zur Synchronisation in einem lokalen Netzwerk in Abhängigkeit von dem besagten Zeitversatzsignal anzupassen.

15. Drahtloses Endbenutzer-Telekommunikationsgerät nach Anspruch 11, umfassend:
Eine Driftlogik, welche betreibbar ist, um die Drifteigenschaften des besagten Referenzsignals zur Synchronisation in einem lokalen Netzwerk zu ermitteln und ausgehend von den besagten Drifteigenschaften zu schätzen, wann ein erneutes Anpassen des besagten Referenzsignals zur Synchronisation in einem lokalen Netzwerk erforderlich ist, um die besagte zeitliche Differenz innerhalb eines vorbestimmten Grenzwerts zu halten.

## Revendications

1. Procédé de réglage d'un signal de référence de synchronisation de réseau local généré par un équipement de télécommunication sans fil d'utilisateur final (30 ; 34 ; 38) qui commande des transmissions réalisées par ledit équipement de télécommunication sans fil d'utilisateur final, ledit procédé comprenant les étapes suivantes :
extraire (S10, S30) une séquence de données transmise par une liaison sans fil depuis une station de base (22), ladite séquence de données étant transmise en synchronisation avec un signal de référence de synchronisation de réseau de stations de base ;
comparer (S30) ladite séquence de données à une séquence de données locale correspondante générée en synchronisation avec ledit signal de référence de synchronisation de réseau local pour générer un signal de désalignement de synchronisation représentatif d'une différence de synchronisation entre ledit signal de référence de synchronisation de réseau de stations de base et ledit signal de référence de synchronisation de réseau local ; et
utiliser (S40) ledit signal de désalignement de synchronisation pour régler ledit signal de référence de synchronisation de réseau local afin de réduire le désalignement avec ledit signal de référence de synchronisation de réseau de stations de base et pour régler la synchronisation des transmissions au moyen dudit équipement de télécommunication sans fil d'utilisateur final avec celles de ladite station de base.

2. Procédé selon la revendication 1, dans lequel ladite étape de comparaison comprend l'étape suivante :
mettre en corrélation ladite séquence de données locale avec ladite séquence de données pour générer ledit signal de désalignement de synchronisation.

3. Procédé selon la revendication 2, dans lequel ledit signal de désalignement de synchronisation est généré en ayant une amplitude et un signe représentatifs de ladite différence de synchronisation entre ledit signal de référence de synchronisation de réseau de stations de base et ledit signal de référence de synchronisation de réseau local.

4. Procédé selon la revendication 3, dans lequel ladite étape d'utilisation comprend l'étape suivante :
régler la génération dudit signal de référence de synchronisation de réseau local en fonction dudit signal de désalignement de synchronisation.

5. Procédé selon la revendication 3, dans lequel ladite étape d'utilisation comprend les étapes suivantes :
générer un signal de correction de synchronisation en réponse audit signal de désalignement de synchronisation, ledit signal de correction de synchronisation étant représentatif d'une correction requise pour ledit signal de référence de synchronisation de réseau local et utiliser ledit signal de correction pour régler la génération dudit signal de référence de synchronisation de réseau local.

6. Procédé selon la revendication 1, dans lequel ladite étape de comparaison comprend l'étape suivante :
comparer chaque séquence parmi une pluralité desdites séquences de données à une séquence correspondante parmi une pluralité desdites séquences de données locales pour générer une pluralité de signaux de désalignement de synchronisation et générer un signal moyenné de désalignement de synchronisation à partir de la pluralité de signaux de désalignement de synchronisation qui est représentatif d'une différence moyenne de synchronisation entre ledit signal de référence de synchronisation de réseau de stations de base et ledit signal de référence de synchronisation de réseau local et dans lequel ladite étape d'utilisation comprend l'étape suivante :
utiliser ledit signal moyenné de désalignement de synchronisation pour régler ledit signal de référence de synchronisation de réseau local afin de réduire le désalignement avec ledit signal de référence de synchronisation de réseau de stations de base.

7. Procédé selon la revendication 1, comprenant les étapes suivantes :
déterminer (S50) des caractéristiques de dérive dudit signal de référence de synchronisation de réseau local ; et
estimer (S50) à partir desdites caractéristiques de dérive le moment où le réglage dudit signal de référence de synchronisation de réseau local est requis par la suite pour maintenir ladite différence de synchronisation dans un seuil prédéterminé.

8. Procédé selon la revendication 1, dans lequel ladite séquence de données comprend un pilote commun transmis depuis ladite station de base sur un canal pilote commun.

9. Procédé selon la revendication 1, dans lequel ledit équipement de télécommunication sans fil d'utilisateur final comprend un élément parmi une station de base pico, une station de base femto et un équipement utilisateur.

10. Produit de programme informatique permettant, lorsqu'il est exécuté sur un ordinateur, de réaliser les étapes du procédé selon la revendication 1.

11. Équipement de télécommunication sans fil d'utilisateur final (30 ; 34 ; 38), comprenant :
une logique de réception (110) permettant d'extraire une séquence de données transmise par une liaison sans fil depuis une station de base (22), ladite séquence de données étant transmise en synchronisation avec un signal de référence de synchronisation de réseau de stations de base ;
une logique de synchronisation (140) permettant de générer un signal de référence de synchronisation de réseau local qui commande des transmissions réalisées par ledit équipement de télécommunication sans fil d'utilisateur final ;
une logique de génération de séquence de données locale (150) permettant de générer une séquence de données locale en synchronisation avec ledit signal de référence de synchronisation de réseau local ;
une logique de comparaison (130) permettant de comparer ladite séquence de données à ladite séquence de données locale pour générer un signal de désalignement de synchronisation représentatif d'une différence de synchronisation entre ledit signal de référence de synchronisation de réseau de stations de base et ledit signal de référence de synchronisation de réseau local ; et
une logique de réglage de synchronisation (155) permettant d'utiliser ledit signal de désalignement de synchronisation pour régler ledit signal de référence de synchronisation de réseau local généré par ladite logique de synchronisation pour s'aligner avec ledit signal de référence de synchronisation de réseau de stations de base et pour régler la synchronisation des transmissions au moyen dudit équipement de télécommunication sans fil d'utilisateur final avec celles de ladite station de base.

12. Équipement de télécommunication sans fil d'utilisateur final selon la revendication 11, dans lequel ladite logique de comparaison permet de mettre en corrélation ladite séquence de données locale avec ladite séquence de données pour générer ledit signal de désalignement de synchronisation.

13. Équipement de télécommunication sans fil d'utilisateur final selon la revendication 11, dans lequel ladite logique de comparaison permet de comparer chaque séquence parmi une pluralité desdites séquences de données à une séquence correspondante parmi une pluralité desdites séquences de données locales pour générer une pluralité de signaux de désalignement de synchronisation et permet de générer un signal moyenné de désalignement de synchronisation à partir de la pluralité de signaux de désalignement de synchronisation qui est représentatif d'une différence moyenne de synchronisation entre ledit signal de référence de synchronisation de réseau de stations de base et ledit signal de référence de synchronisation de réseau local, et ladite logique de réglage de synchronisation permet d'utiliser ledit signal moyenne de désalignement de synchronisation pour régler ledit signal de référence de synchronisation de réseau local pour réduire le désalignement avec ledit signal de référence de synchronisation de réseau de stations de base.

14. Équipement de télécommunication sans fil d'utilisateur final selon la revendication 11, dans lequel ladite logique de réglage de synchronisation permet de régler la génération dudit signal de référence de synchronisation de réseau local en fonction dudit signal de désalignement de synchronisation.

15. Équipement de télécommunication sans fil d'utilisateur final selon la revendication 11, comprenant :
une logique de dérive permettant de déterminer des caractéristiques de dérive dudit signal de référence de synchronisation de réseau local et pour estimer à partir desdites caractéristiques de dérive le moment où le réglage dudit signal de référence de synchronisation de réseau local est requis par la suite pour maintenir ladite différence de synchronisation dans un seuil prédéterminé.
